# EUROPEAN PATENT SPECIFICATION

(11) **EP 0 881 139 B1**
(45) Date of publication and mention of the grant of the patent: **21.11.2001**
(21) Application number: 98108795.0
(22) Date of filing: 14.05.1998
(51) Int. Cl.: B62D 53/02, B62D 33/063

(54) **Vehicle for handling various material or operating units in sheds, airports, markets and the like**
Fahrzeug zum Bewegen von Material oder Maschinen in Hallen, Flughäfen, Lager oder dergleichen
Véhicule pour la manutention de matières premières ou de machines dans des hangars, aéroports, magasins ou endroits similaires

(30) Priority: 28.05.1997 IT MI971251; 05.08.1997 IT MI971877
(43) Date of publication of application: 02.12.1998
(73) Proprietor: TECHMO Car S.p.A., I-35010 Limena PD (IT)
(72) Inventor: Zannini, Gianfranco, 35010 Limena PD (IT)
(74) Representative: Trupiano, Federica

(56) References cited:
- DE-C- 324 477
- DE-C- 577 300
- FR-A- 409 688
- FR-A- 1 180 063
- FR-A- 1 181 629
- GB-A- 2 099 767

## Description

The present invention relates to a vehicle for the transportation and handling of various materials or operating units in rooms wherein a high mobility and wide manoeuvre capacity is required in narrow spaces and/or in the presence of obstacles, impediments or the like, in particular in the insides of sheds, warehouses, deposits, airports, markets, deposit and/or manoeuvre areas for heavy means and the like.

As is known, in industrial plants, warehouses, deposits and the like, it is necessary to handle various materials, often heavy and cumbersome due to their form and size, usually in very narrow spaces or in the presence of obstacles and utilising especially equipped self-propelled vehicles, which have however to follow tortuous and obliged runs. For instance, in warehouses or deposits, it is necessary to arrange the various goods according to a pre-fixed order and to collect then when needed, performing the manoeuvres with much precision.

Instead, in other cases, it is necessary to transport operating units from one to another place and to position them suitably and exactly, so than such units can perform their function.

For instance, it is known that in airports it is necessary to position near the leaving aircraft a operating unit comprising the generator to start the engines; this operation requires a careful positioning manoeuvre which must take in due account the presence of the wings and the tail of the aircraft.

As is also known, in plants of the metallurgical, iron-metallurgical types, in foundries and the like, it is necessary to handle various materials, often heavy and cumbersome due to the form and size, usually in very narrow spaces and utilising suitably equipped self-propelling vehicles.

For instance, the plants for the electrolytic production of aluminium require the periodic replacement of anodes because of their wearing during the working in electrolysis cells. Both the worn anodes and the new ones are prepared by groups positioned on pallets, which are thereafter transported and handled by means of a particular type of self-propelling vehicle that can move in the inside of the plant, between the rows of electrolytic cells.

The present types of self-propelling vehicles are usually constituted by a tractor with two driving and steering wheels and by a trailer; the tractor is usually connected to the trailer through a vertical axis joint, suitable to allow the steering of the tractor with respect to the trailer according to an angle, relatively to the longitudinal axis of the vehicle, which is always very limited because of the presence of the front part of the trailer, which is very approached to the tractor.

FR-A-1181629 discloses a vehicle for light transportation comprising a trailer, a fixed platform integral with the trailer upon which a driver stands and a driving and steering structure rotating about its vertical axis. The rotating structure is constituted by a handlebar which is integral with a directional column , a motor and a couple of driving and steering wheels; such wheels are very close to each other, so that they operate just as a single wheel.

DE-C-324477 discloses a vehicle according to the preamble of claim 1 and comprising a trailer and a driving and steering structure rotating about its vertical axis. The driving and steering structure comprises:
a structure comprising a driver's cab and a steering device which operates manually along the internal circular edge of the trailer by means of a gear directly connected with and operated by said steering device; a frame, supporting the gearbox and the engine, is integrally connected to the structure comprising the steering device, and rotates guided along a rail by means to two rolls. The driving and steering structure can rotate of an arch defined by the length of the rail.

Object of the present invention is to provide a vehicle for the transportation and handling of various materials or operating units, so designed and structured as to obviate the structural complexity and manoeuvre and/or visibility limitations due to the reduced steering angle of the present vehicles for the handling of materials or transportation of operating units in the inside of plants, sheds, markets, airports and the like, and to allow the realisation of all the necessary manoeuvres in perfect conditions of visibility by the operator.

A further object is to provide a vehicle suitable for handling any product and/or operating and/or service equipment in areas wherein a high manoeuvre capacity is needed, together with a full visibility of the operations to be performed.

Another object of the invention is to provide a self-propelling vehicle of the type specified hereinabove, so structured as to have longitudinal dimensions markedly smaller than those of the known vehicles - the dimensions of the loading or transportation structure being the same - with obvious advantages as concerns its movement possibilities in very narrows areas and/or areas having obstacles, encumbrances and the like.

A not least object of the invention is to provide a self-propelling vehicle of high reliability and easily drivable both in the forwards and the reverse motion.

These and still other objects, which will be more clearly stressed hereinafter are achieved by a self-propelling vehicle for the transportation and handling of various materials or operating units in rooms wherein a wide manoeuvre capacity and the utmost visibility are required in narrow spaces and/or in the presence of various obstacles and/or impediments, having the features of claim 1. The vehicle comprises:
- a trailer comprising a structure suitable to contain said materials or said operating or service units to be handled, and a front part or extension, provided with a circular through-hole or seat,
- a driving and steering structure or tractor constituted by a revolving platform, a driver's cab, a driving and steering axle, provided with a couple of wheels integrally connected to said revolving platform by means of a tubular element freely rotatably housed in said circular through-hole or seat,
- means for connecting said driving and steering structure and said front part of the trailer, suitable to allow the free endless rotation both in the clockwise and the anti-clockwise direction of said driving and steering structure relatively to said front part of the trailer,
- driving means suitable to ensure the movement of the vehicle as well as the rotation of said driving and steering structure, so as to allow the operator to perform the translation of the vehicle and the rotation of said driving and steering structure from one only driving place.

More particularly, said means connecting said driving and steering structure and said front part are constituted by a fifth wheel having the lower part strongly connected to said driving and steering axle, and the upper part rigidly keyed on the lower plane of said front part of the trailer.

Besides, said driving means are associated to said platform or said axle, or else they can be associated to said trailer and transmit the motion to said axle by means of suitable hydraulic, pneumatic means or the like passing through suitable uprights and tie-rods.

The operating part of the vehicle according to the invention is equipped with an own axle having two or more wheels.

The chassis of said vehicle portion is provided with a front part (extension), on whose lower surface a fifth wheel, or like revolving element, is installed, which is controlled by a special actuator and allows the rotation of the elements connected to it. More in detail, in the lower part of said fifth wheel, a driving axle is fastened, provided, as usual, with own engines, reducers, wheels and whatever else is necessary for the driving of a vehicle. By means of a tubular element that goes through the central hollow zone of the fifth wheel and the supporting front part of the trailer, as said hereinabove, the driving axle rigidly supports a platform which, in this way, lies above said front part or extension and can freely rotate together with the driving structure.

Said platform houses on the one hand the operator's cab (complete with seat, console, controls, pedals, accessories and whatever else is usually applicable), while the engine (which may be of the electrical or endothermic type according to the needs) may be installed, preferably though not necessarily, on the other side of the platform, together with all the necessary accessories such as tanks, pumps or other ones.

According to another embodiment of the present invention, said revolving platform is constituted by a first transmission element integral with said tubular element, connected through suitable kinematic means, to a second transmission element suitable to rotate about an own vertical axis parallel to the rotation axis of said tubular element off-centred relatively to the latter and supporting said driver's cab.

In this way, the driver's cab may be positioned, always associated to the driving and steering structure, but off-centred relatively to the rotation axis of the same structure, so as to satisfy, for instance, particular visibility requirements or for the purposes of a more effective management of particular operating units or the like.

Said transmission elements may be constituted by pulleys connected to one another by a belt, a chain or the like, or may be constituted by gearwheels or other equivalent transmission kinematic means, suitable to cause the rotation of said driver's cab synchronously with the rotation of said driving and steering axle.

The electric or hydraulic feeding of the operating devices located in the control part subject matter of the invention need no particular connections as they rotate integrally with the engine, while the feeding of the devices located in the operating part of the vehicle is obtained by drawing the energy source from the rotation axis of the control module, for instance (but not necessarily only in such way) by connecting the mobile half-part of a common rotating joint to the revolving platform and by installing the fixed half-part of said joint on a portal-frame connected to the operating part of the vehicle. The width and the height of said portal are such as to allow the rotation of said revolving platform and the structures connected to the same without any interference.

According to another embodiment, the transmission of at least a part of the controls, in particular the electric ones, from the control part to the operating part, is obtained by means of radio signals.

Further characteristics and advantages of the present invention will be better stressed by the following detailed description, made with reference to the attached tables of drawings, solely given by way of non limiting example, wherein:
Figure 1 shows schematically a side view the self-propelling vehicle, realised according to the invention;
Figure 2 shows, always schematically, a top view of the vehicle of Figure 1,
Figure 3 shows a front view of the same vehicle of Figure 1, while
Figure 4 shows, in front view, the self-propelling vehicle according to an alternative embodiment of the invention.

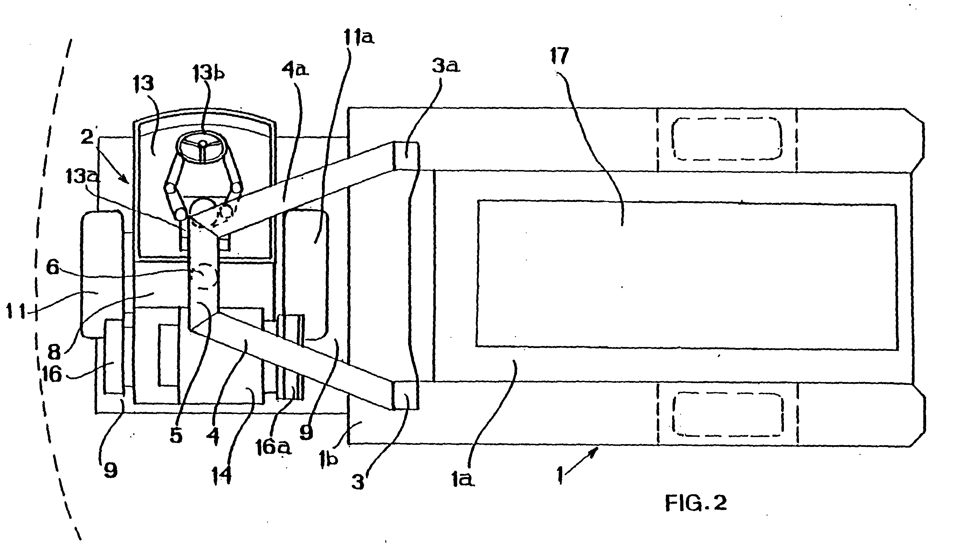

With reference to said figures, the self-propelling vehicle for the transportation and handling of various materials and operating units in the inside of sheds, warehouses, airports, markets and the like, and anywhere a high manoeuvre capacity is required in narrow spaces and in the presence of obstacles and/or various impediments, is substantially constituted by a driving unit, comprising a trailer 1 and a two-wheeled tractor, globally indicated by 2 in Figure 2.

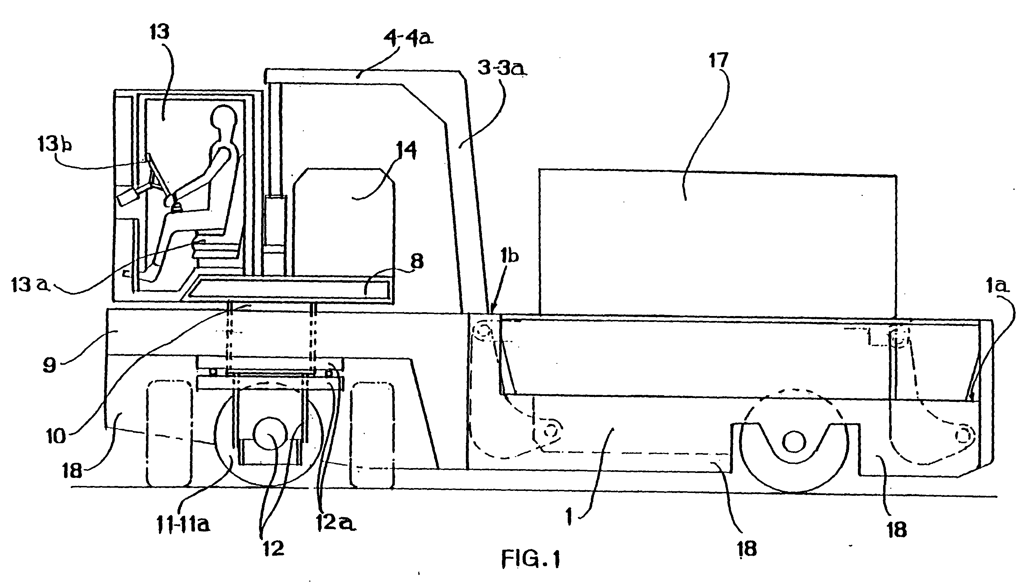

The front part 9 of the trailer (Figure 1) has a circular hole, gone through by the tubular element 10 integral in the upper part with platform 8 and in the lower part with the driving and steering axle 12. Said axle forms a whole with the lower part of the fifth wheel 12a, while the upper part of said fifth wheel is rigidly keyed on the lower plane of the front part 9 of trailer 1.

The axle, to which wheels 11-11a are rigidly connected, is also provided with own engines, reducers and whatever else is necessary to allow both the translation of the vehicle and the rotation of said wheels about the axis of the tubular element, in order to allow steering.

Besides, in order to ensure the necessary hydraulic and electrical controls to the activation systems housed in the trailer, a bridge-like structure is anchored to the front part of said trailer, said structure being constituted by the uprights 3-3a, inclined towards the median longitudinal axis of the trailer, with whose top two tie-rods 4-4a are integral (i.e. they form a whole body), arranged substantially in horizontal position and united to each other by a further tie-rod 5, which is cantilever-supported by the bridge constituted by uprights 3-3a and tie-rods 4-4a.

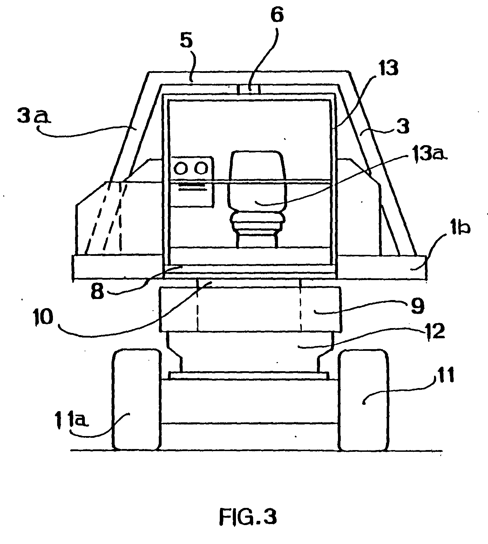

On the median line of said tie-rod 5 a vertical axis cylindrical shaft 6 is rigidly keyed (Figures 1 and 3), whose lower end is fitted in a bush or sleeve freely rotatable, without translation, around the same shaft. Said bush is then connected to platform 8, which is therefore free to rotate about the vertical axis cylindrical shaft 6.

To the revolving platform 8 there are also stably associated the driver's cab 13 (with seat 13a, steering wheel 13b and control dashboard) and the direct current driving means 14 of a known type electrically operated and the related diesel or gasoline accumulator.

As the supports of the front wheels 11-11a are rigidly associated to said revolving platform, the motion transmission by engine 14 to said wheels may be obtained by known means, such as gears and the like, for instance by means of gearwheels or pulleys, as schematically shown in Figure 2 and indicated by 16-16a.

Lastly, in the figures there are generally indicated by 17 the products loaded on pallet 1a (for instance, anodes for electrolysis cells for the production of primary aluminium) or the operating units (for instance, the generator in case of an airport service vehicles), and by 18 a sheet apron for the trailer and the front part.

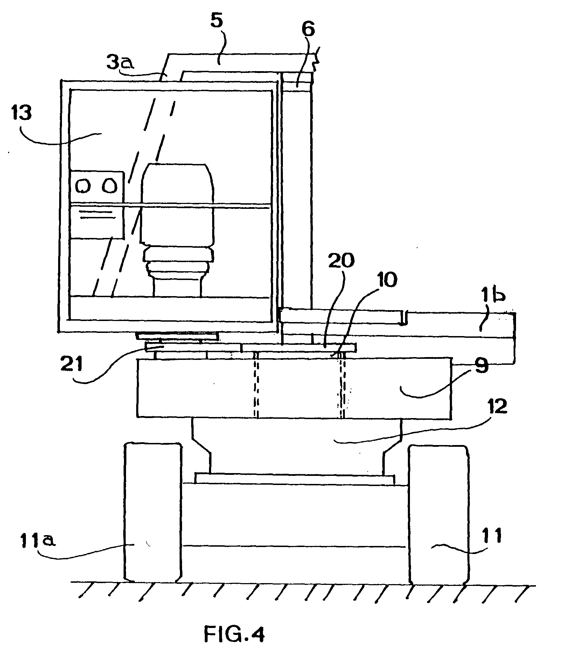

According to the embodiment of Figure 4, the driver's cab 13 is off-centred relatively to the rotation axis of the driving and steering axle 12; a first transmission element, generically indicated by 20, rotating integrally with said axle 12, causes the driver's cab 13 to rotate synchronously with said axle by means of the second transmission element generically indicated by 21 and rotating integrally with said driver's cab, by means of a belt or chain or by an equivalent suitable gear system.

From what has been expounded hereinabove and what is illustrated by the figures, it clearly appears that the presence of a driving and steering structure allows to obtain a vehicle constituted by one only four-wheeled unit - the front ones being the driving wheels - as said structure connects the trailer to the driver's cab with the related engine and allows the rotation of these latter; besides, it allows the operator to pass from the forwards (Figures 1 and 4) to the reverse motion by activating the suitable devices located in the inside of the one only driving place (power steering); besides, again, to perform the reverse motion, the whole cab rotates by 180° about its vertical axis, whereby there is obtained at the same time a correct and complete view of the manoeuvre to be performed, relatively to the different functions of the operating units, or the approach to shelvings or pits to load and unload materials, positioning a generator near an aircraft, and the like. Said rotation of the cab may be continuous either in one direction and in the opposed one, according to the manoeuvre requirements, and may be also carried out for a whole turn angle and even more.

The vehicle described hereinabove allows also to obtain the advantage of a marked shortening of the same vehicle compared with the known vehicles for the same uses. Besides, the vehicle allows a drastic improvement of manoeuvre capacity (reduction in steering radius), a better drivability ensuing from cab's moving synchronously with the driving and steering axle, whereby the operator has the maximum visibility both in the forwards and the reverse motion, as well as when manoeuvering.

The absence of any constraint relatively to the angle between the driving unit and the vehicle allows an unlimited width for said angle.

It is clear that the vehicle according to the invention may be utilised to perform all the operations required in metallurgical plants, besides those necessary for the transportation and handling of anodes and ladles, by simply using a trailer type provided with a suitable containment and support structure.

For instance, for the transportation and handling of ladles, a trailer may be used provided with a bridge-structure, such as, for instance, the one described in European Patent no. 0211846 by the same applicant, or equivalent bridge-structures.

## Claims

1. A self-propelling vehicle for the transportation and handling of various materials and products or operating and service units in rooms wherein a wide manoeuvre capacity and visibility is required in narrow spaces and/or in the presence of various obstacles and impediments, such as industrial sheds, markets, airports and the like comprising a trailer (1) constituted by a structure (1a) suitable to contain said products to be handled and/or transported or said operating or service unit, and by a front part (9), a driving and steering structure (2), means for connecting said driving and steering structure with said front part (9) of the trailer and driving means, wherein said
driving and steering structure is constituted by a revolving platform (8), a driver's cab (13), a driving and steering axle (12), provided with a couple of wheels (11,11a) integrally connected to said revolving platform (8) by means of a tubular element (10) freely rotatably housed in a circular through-hole or seat, provided in said front part (9), **characterised in that** said means for connecting said driving and steering structure and said front part (9) of the trailer are constituted by a fifth wheel (12a) having the lower part integrally connected to said driving and steering axle (12) and the upper part rigidly keyed on the lower plane of said front part (9) of the trailer, said tubular element (10) being integral in the upper part with said platform (8) and in the lower part with said axle (12), so allowing, the free endless continuous rotation both in the clockwise and the anti-clockwise direction of said driving and steering structure about its own vertical axis up to 360° and beyond relatively to said front part of the trailer, and **in that** said driving means (14) are placed upon said platform (8) within the area of said platform with no protruding parts or are associated to said trailer and transmit the motion to said axle by means of suitable hydraulic, pneumatic or like means passing through suitable uprights and tierods (3-3a; 4-4a), so ensuring the continuous rotation of said driving and steering structure up to 360° and beyond.

2. The vehicle according to claim 1, **characterised in that** said revolving platform is constituted by a first transmission element (20) integral with said tubular element (10), connected, through suitable kinematic means, to a second transmission element (21) suitable to rotate about an own vertical axis parallel to the rotation axis of said tubular element (10) off-centred relatively to the latter and supporting said driver's cab (13).

3. The vehicle according to claim 2, **characterised in that** said transmission elements and said kinematic means are constituted by pulleys connected to each other by a belt, a chain or the like, or by gearwheels, or other equivalent kinematic means, suitable to cause the driver's cab to rotate synchronously with the rotation of said driving and steering axle.

4. The vehicle according to claim 1, **characterised in that** the transmission of at least a part of the controls, in particular the electrical ones, by the control part to the operating part is performed by means of radio signals.

5. Use of the vehicle according to claim 1 for the transportation and handling and the positioning of operating and/or service units, such as generators.

6. Use of the vehicle according to claim 1 for the transportation and handling of anodes in plants for the production of primary aluminium.

7. Use of the vehicle according to claim 1 for the transportation and handling of ladles, by employing a trailer provided with a bridge structure.

## Patentansprüche

1. Selbstangetriebenes Fahrzeug für den Transport und das Handhaben verschiedener Materialien und Produkte oder Betriebs- und Dienstleistungseinheiten in Räumen, in denen eine große Manövrierfähigkeit und breite Sicht auf engem Raum erforderlich sind und/oder in Gegenwart verschiedener Sperren und Hindernisse, z. B. in Industriehallen, auf Märkten, auf Flughäfen und dergleichen, mit einem Anhänger (1), bestehend aus einem Aufbau (1a), der geeignet ist, die genannten zu handhabenden und/oder zu transportierenden Produkte oder Betriebs- oder Dienstleistungseinheiten aufzunehmen, und aus einem Frontteil (9), sowie mit einem Antriebs- und Lenkaufbau (2), mit einer Vorrichtung zum Verbinden des Antriebs- und Lenkaufbaus mit dem Vorderteil (9) des Anhängers sowie mit einer Antriebsvorrichtung, wobei der Antriebs- und Lenkaufbau aus einer Drehplattform (8), einem Führerhaus (13) sowie einer Antriebs- und Lenkachse (12) besteht, die mit einem Paar Räder (11, 11a) versehen ist, die mittels eines Rohrelements, das frei drehbar in einem an dem Vorderteil (9) vorgesehenen kreisförmigen Durchgangsloch oder Sitz frei drehbar untergebracht ist, mit der Drehplattform (8) direkt verbunden sind, **dadurch gekennzeichnet, daß** die Vorrichtung zum Verbinden des Antriebs- und Lenkaufbaus mit dem Vorderteil (9) des Anhängers aus einem fünften Rad (12a) besteht, dessen unterer Teil direkt mit der Antriebs- und Lenkachse (12) verbunden ist und dessen oberer Teil an der unteren Ebene des genannten Vorderteils (9) des Anhängers fest verkeilt ist, wobei das Rohrelement (10) in dem oberen Teil direkt mit der Plattform (8) und im unteren Teil mit der Achse (12) verbunden ist, wodurch bezüglich des Vorderteils des Anhängers eine freie endlose kontinuierliche Drehung des Antriebs- und Lenkaufbaus um seine eigene senkrechte Achse im Uhrzeiger- und Gegenuhrzeigersinn um bis zu 360° und darüber hinaus ermöglicht wird, und daß die Antriebsvorrichtung (14) auf der Plattform (8) innerhalb der Fläche der Plattform ohne vorstehende Teile angeordnet oder dem Anhänger zugeordnet ist und die Bewegung zu der genannten Achse mittels einer geeigneten hydraulischen, pneumatischen oder ähnlichen Einrichtung überträgt, die durch geeignete Stützen und Lenkgestänge (3-3a; 4-4a) hindurchgeführt ist, so daß die kontinuierliche Drehung des Antriebs- und Lenkaufbaus um bis zu 360° und darüber hinaus sichergestellt ist.

2. Fahrzeug nach Anspruch 1, **dadurch gekennzeichnet, daß** die Drehplattform aus einem ersten Übertragungselement (20) besteht, das mit dem Rohrelement (10) direkt verbunden ist, und über eine geeignete kinematische Vorrichtung mit einem zweiten Übertragungselement (21) verbunden ist, das um eine eigene senkrechte Achse drehbar ist, die parallel zur Drehachse des Rohrelements (10) außermittig bezüglich der letzteren verläuft und das Führerhaus trägt.

3. Fahrzeug nach Anspruch 2, **dadurch gekennzeichnet, daß** die genannten Übertragungselemente und die erwähnte kinematische Vorrichtung aus Scheiben, die über einen Riemen, eine Kette oder dergleichen miteinander verbunden sind, oder aus Zahnrädern oder einer anderen äquivalenten kinematischen Vorrichtung bestehen, die geeignet sind, das Führerhaus synchron mit der Drehung der Antriebs- und Lenkachse in Drehung zu versetzen.

4. Fahrzeug nach Anspruch 1, **dadurch gekennzeichnet, daß** die Übertragung mindestens eines Teils der Steuerungen, insbesondere der elektrischen Steuerungen, vom Steuerteil zum Betriebsteil mittels Funksignalen durchgeführt wird.

5. Verwendung der Vorrichtung nach Anspruch 1 zum Transportieren und Handhaben sowie Positionieren von Betriebs- und/oder Dienstleistungseinheiten, wie Generatoren.

6. Verwendung der Vorrichtung nach Anspruch 1 zum Transportieren und Handhaben von Anoden in Betrieben zum Herstellen von Hüttenaluminium.

7. Verwendung des Fahrzeugs nach Anspruch 1 zum Transportieren und Handhaben von Gießpfannen durch Benutzen eines Anhängers, der mit einem Brückenaufbau ausgerüstet ist.

## Revendications

1. Un véhicule auto-propulseur pour le transport et la manutention de matériaux et produits variés ou d'unités de service et d'exploitation dans des pièces dans lesquelles une large capacité de manoeuvre et de visibilité est requis dans des espaces étroits ou en présence d'obstacles et d'entraves variés, tels que des hangars industriels, des marchés, des aéroports et similaires, le véhicule comprenant une remorque (1) constituée par une structure (1a) en mesure de contenir lesdits produits à manutentionner et/ou transporter ou les unités de service ou d'exploitation, et par une partie frontale (9), une structure d'entraînement et de braquage, des moyens pour relier ladite structure d'entraînement et de braquage avec ladite partie frontale (9) de la remorque et des moyens de conduite, dans lesquels ladite structure d'entraînement et de braquage est constituée par une plate-forme (8) tournante, une cabine de conducteur (13), un essieu (12) d'entraînement et de braquage, pourvu d'une paire de roues (11, 11a) intégralement reliées à ladite plate-forme tournante (8) au moyen d'un élément tubulaire (10) encastré de manière librement rotative dans un trou débouchant ou siège, ménagé dans ladite partie frontale (9), **caractérisé en ce que** lesdits moyens pour relier ladite structure d'entraînement et de braquage avec ladite partie frontale (9) de la remorque sont constitués par une cinquième roue (12a) ayant une partie inférieure intégralement reliée audit essieu (12) d'entraînement et de braquage et la partie supérieure calée rigidement sur le plan inférieur de ladite partie frontale (9) de la remorque, ledit élément (10) tubulaire étant intégré dans la partie supérieure avec ladite plate-forme (8) et dans la partie inférieure avec ledit essieu (12), permettant ainsi la rotation continue libre et sans fin, dans le sens de rotation des aiguilles d'une montre et dans le sens contraire, de ladite structure d'entraînement et de braquage autour de son propre axe vertical jusqu'à 360° et au-delà par rapport à ladite partie frontale de la remorque, et **caractérisé en ce que** lesdits moyens d'entraînement (14) sont placés au-dessus de ladite plate-forme (8) à l'intérieur de la zone de ladite plate-forme sans partie en saillie ou bien sont associés à ladite remorque et transmettent le mouvement auxdits essieux par des moyens hydrauliques pneumatiques appropriés ou des moyens similaires passant à travers des colonnes et des barres de raccordement (3-3a ; 4-4a) adaptées permettant ainsi la rotation continue de ladite structure d'entraînement et de braquage jusqu'à 360° et au-delà.

2. Le véhicule selon la revendication 1, **caractérisé en ce que** ladite plate-forme tournante est constituée par un premier élément de transmission (20) intégré avec ledit élément tubulaire (10), relié, par des moyens cinématiques appropriés, à un deuxième élément de transmission (21) adapté pour tourner autour de son propre axe vertical parallèle à l'axe de rotation dudit élément tubulaire (10) excentré par rapport à ce dernier et supportant ladite cabine du conducteur (13).

3. Le véhicule selon la revendication 2, **caractérisé en ce que** lesdits éléments de transmission et lesdits moyens cinématiques sont constitués par des poulies reliées entre elles par une courroie, une chaîne ou similaire, ou par des roues dentées, ou d'autres moyens cinématiques équivalents, adaptés pour provoquer la rotation de la cabine du conducteur de manière synchronisée avec la rotation dudit essieu d'entraînement et de braquage.

4. Le véhicule selon la revendication 1, **caractérisé en ce que** la transmission d'au moins une partie du contrôle, en particulier du contrôle électrique, par la partie de contrôle vers la partie de commande, est réalisée au moyen de signaux radio.

5. Utilisation d'un véhicule selon la revendication 1 pour le transport et la manutention et le positionnement d'unités d'exploitation et/ou de service, tels que des générateurs.

6. Utilisation d'un véhicule selon la revendication I pour le transport et la manutention d'anodes dans des usines pour la production d'aluminium primaire.

7. Utilisation d'un véhicule selon la revendication 1 pour le transport et la manutention de poches à couler, en employant une remorque pourvue d'une structure de pont.
